# EUROPÄISCHE PATENTSCHRIFT

(11) **EP 0 432 420 B1**
(45) Veröffentlichungstag und Bekanntmachung des Hinweises auf die Patenterteilung: **02.02.1994**
(21) Anmeldenummer: 90120386.9
(22) Anmeldetag: 24.10.1990
(51) Int. Cl.: B60N 2/22

(54) **Gelenkbeschlag für Sitze mit verstellbarer Rückenlehne, insbesondere Kraftfahrzeugsitze**
Hinge assembly for seats, having an adjustable backrest, particularly for car seats
Articulation pour sièges à dossier réglable, en particulier pour sièges de véhicules automobiles

(30) Priorität: 14.12.1989 DE 3941215
(43) Veröffentlichungstag der Anmeldung: 19.06.1991
(73) Patentinhaber: KEIPER RECARO GmbH & Co., D-42824 Remscheid (DE)
(72) Erfinder: Kafitz, Egon, W-6755 Hochspeyer (DE)
(74) Vertreter: Buse, Karl Georg, Dipl.-Phys.

(56) Entgegenhaltungen:
- DE-A- 3 013 304

## Beschreibung

Die Erfindung betrifft einen Gelenkbeschlag für Sitze mit verstellbarer Rückenlehne, insbesondere Kraftfahrzeugsitze, bei denen ein dem Sitzteil zugeordneter, fester Gelenkteil und ein der Lehne zugeordneter, schwenkbarer Gelenkteil über eine Schwenkachse miteinander verbunden sind, wobei eine die Lage beider Gelenkteile zueinander bestimmende, als Getriebe ausgebildete Ver- und Feststelleinrichtung vorgesehen ist, und die Schwenkachse zur Lagerung des einen Gelenkteiles einen Exzenterabschnitt aufweist, der einen mit der Schwenkachse drehfesten Mitnehmer aufweist, der zwischen die Schmalseiten zweier gegeneinander geneigter, die Schwenkachse bereichsweise umgreifender Keilsegmente faßt, zwischen deren Breitseiten ein diese im Sinne einer Radialspielreduzierung auseinanderdrückender Kraftspeicher angeordnet ist.

Bei einem aus der DE-A-3 013 304 ersichtlichen Gelenkbeschlag der eingangs genannten Art bleiben die Keilsegmente außer in der Ruheposition des Gelenkbeschlages auch während seiner Verstellung in Anlage an der Innenwandung der Lagerbohrung des einen Gelenkteiles und stützen diesen auch während der Verstellphase ab. Zwar wird bei Beginn jeder Verstellphase die Verspannung zwischen Lager- und Verzahnung aufgehoben, jedoch führt die von der Lehnenbelastung verursachte Stützkraft zur belasteten Reibung zwischen dem Außenumfang der Keilsegmente und dem Innenumfang der Lagerbohrung des entsprechenden Gelenkteiles. Um die zur Spieleliminierung erforderliche Hubbewegung realisieren zu können, ist es notwendig, die Keilsegmente an ihren Außenflächen so auszubilden, daß sich eine kleinflächige Abstützung ergibt. Nach gelöster Verspannung erfolgt das Gleiten zwischen der zylindrischen Lagerbohrung und den Traglinien auf den Außenflächen der Keilsegmente. Eine derartige Gleitlagerung weist hohe Flächenpressungen, großen Verschleiß sowie ungleichmäßige Laufeigenschaften auf, was zu hoher und ungleichmäßiger, vom Sitzbenutzer aufzubringender Stellkraft führt.

Die Aufgabe der Erfindung besteht darin, eine Stellvorrichtung der eingangs genannten Art dahingehend zu verbessern, daß unter Beibehaltung der Radialspieleliminierung bei Ruhestellung des Gelenkbeschlages das Laufverhalten verbessert und der Verschleiß während der Stellphase verringert werden.

Diese Aufgabe ist erfindungsgemäß dadurch gelöst, daß der Exzenterabschnitt außer den Keilsegmenten ein neben diesen angeordnetes, auf der Schwenkachse bereichsweise abgestütztes, sichelartiges Zentriersegment umfaßt, das zusammen mit den Keilsegmenten von der Lagerbohrung des einen Gelenkteiles umgriffen ist. Bei Lösung der Keilsegmente aus ihrer Stützfunktion am Beginn einer jeden Bewegungsphase wird die durch Verspannen erzielte Radialspieleliminierung aufgehoben, so daß während der Verstellbewegung eine Abstützung der Lagerbohrung des auf dem Exzenterabschnitt abgestützten Gelenkteiles am Zentriersegment selbst erfolgt, so daß während der eigentlichen Verstellbewegung die Keilsegmente belastungsfrei bleiben, und die Gleitbewegung auf den Zylinderflächen des Zentriersegmentes erfolgt.

Um während der Ruheposition des Gelenkbeschlages das Radialspiel sicher eliminieren zu können, stimmen vorteilhaft die Außenradien und die Innenradien der Keilsegmente und des Zentriersegmentes überein, wobei jedoch das Exzentermaß zwischen dem Zentrum des Innenradius und dem Zentrum des Außenradius der Keilsegmente etwas größer ist als das Exzentermaß zwischen dem Zentrum des Innenradius und dem Zentrum des Außenradius des Zentriersegmentes.

Um einerseits den vorteilhaft als Druckfeder ausgebildeten Kraftspeicher zwischen den Breitseiten des Keilsegmentes fixieren zu können und andererseits die Lösebewegung der Keilsegmente zu begrenzen, weisen die einander zugekehrten Breitseiten der Keilsegmente vorzugsweise eine sich in Achsrichtung der Schwenkachse erstreckende Rille auf, wobei der unterhalb dieser Rille befindliche Bereich jeder Breitseite eine Anschlagnase bildet.

Eine kleinflächige Abstützung der den Exzenterabschnitt umfassenden Lagerbohrung an den Keilsegmenten läßt sich erzielen, indem der Außenumfang jeden Keilsegmentes auf etwa seiner Viertellänge zur Breitseite hin flacher gekrümmt ansteigt als auf seinem vorhergehenden Längenbereich. Dadurch ist auch sichergestellt, daß während der Verstellphase ausschließlich der Zentrierring die tragende Funktion innerhalb der Lagerbohrung übernimmt.

Um eine sichere Lösung der Keilsegmente aus ihrer Stützlage zu Beginn der Verstellbewegung zu erzielen, ist zwischen den einen größeren Winkel als 180° voneinander aufweisenden Anschlagflächen des Mitnehmers das Zentriersegment mit größerem Spiel als die durch den Kraftspeicher miteinander in Verbindung stehenden und ebenfalls zwischen die Anschlagflächen des Mitnehmers fassenden Keilsegmente angeordnet.

Eine kompakte Baueinheit des Exzenterabschnitts läßt sich schaffen, indem das sichelartige Zentriersegment den Bodenteil einer Büchse bildet, in welche die Keilsegmente mit ihrem Kraftspeicher eingesetzt sind, wobei zwischen die Keilsegmente und in den Bodenausschnitt des Zentriersegmentes der Stellarm des Mitnehmer einer mit der Stellwelle drehfest verbundenen Mitnehmerscheibe faßt. Dabei läßt sich eine reibungsarme Lagerung erzielen, indem die das Zentriersegment aufweisende Büchse an ihrem Außenumfang ein Wälzlager lagert, das in der Lagerbohrung eines der beiden Gelenkteile abgestützt ist.

Die Erfindung ist in Ausführungsbeispielen auf der Zeichnung dargestellt und wird nachfolgend näher erläutert. Es zeigen:
- Fig. 1: einen Fahrzeugsitz mit einem die Rückenlehne mit dem Sitzteil verbindenden Gelenkbeschlag in perspektivischer Darstellung,
- Fig. 2: den im Vertikalschnitt dargestellten Gelenkbeschlag in einer gegenüber Fig. 1 vergrößerten Darstellung,
- Fig. 3: den aus Fig. 2 ersichtlichen Gelenkbeschlag in einer Schnittansicht nach der Linie III - III von Fig. 2, in welcher der Exzenterbereich in Ruheposition dargestellt ist,
- Fig. 4: den aus Fig. 3 ersichtlichen Exzenterbereich während seiner Verstellfunktion,
- Fig. 5: ein weiteres Ausführungsbeispiel des in einem Gelenkbeschlag angeordneten Exzenterabschnitts im Vertikalschnitt analog Fig. 2,
- Fig. 6: den aus Fig. 5 ersichtlichen Exzenterbereich in einer Schnittansicht nach der Linie VI - VI von Fig. 5 in Ruheposition,
- Fig. 7: das bei dem Ausführungsbeispiel gemäß den Fig. 2 bis 4 eingesetzte Zentriersegment in einer Ansicht,
- Fig. 8: eines der bei den Ausführungsbeispielen verwandten Keilsegmente in einer Ansicht.

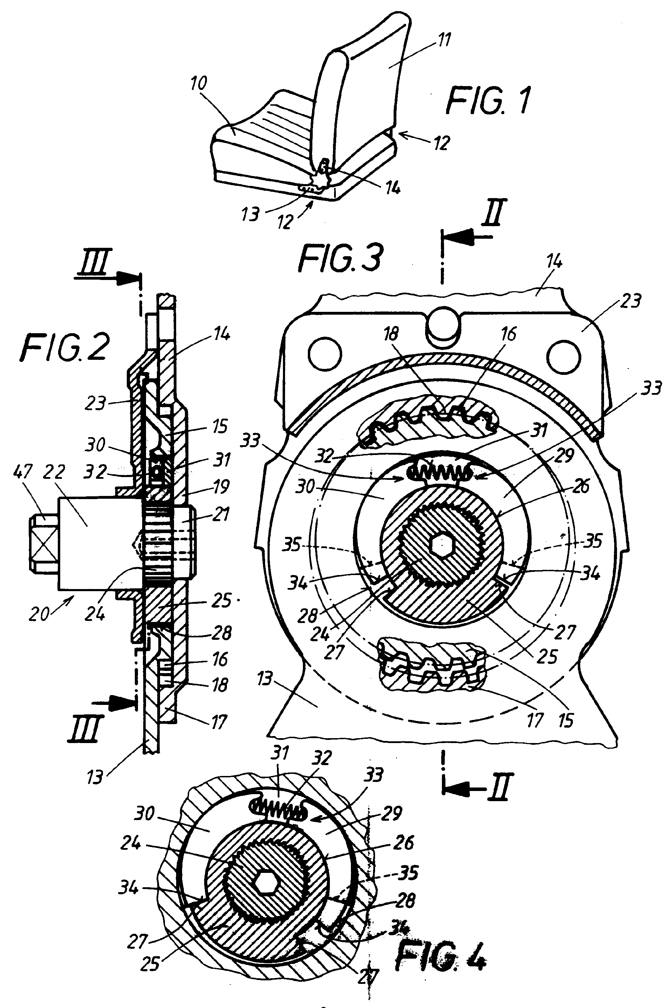

Bei dem aus Fig. 1 ersichtlichen Fahrzeugsitz ist dessen Sitzteil 10 mit der Rückenlehne 11 über Gelenkbeschläge 12 zur Einstellung der Neigungslage der Rückenlehne 11 verbunden. Jeder Gelenkbeschlag 12 umfaßt einen mit dem Sitzteil 10 fest verbundenen, unteren Gelenkteil 13 und einen mit der Rückenlehne 11 verbundenen, schwenkbaren, oberen Gelenkteil 14 sowie eine den oberen Gelenkteil 14 gegenüber dem unteren Gelenkteil 13 verschwenkende Ver- und Feststelleinrichtung.

Diese Ver- und Feststelleinrichtung umfaßt ein beispielsweise durch Ausprägen aus dem Gelenkteil 13 gebildetes Stirnrad 15 mit einer Außenverzahnung 16, welche mit der Innenverzahnung 18 eines beispielsweise ebenfalls durch Ausprägen gebildeten Zahnkranzes 17 des Gelenkteiles 14 kämmt. Der Durchmesser des Kopfkreises der Außenverzahnung 16 ist um wenigstens eine Zahnhöhe kleiner als der Durchmesser des Fußkreises der Innenverzahnung 18. Demgemäß weisen die Verzahnungen 16 und 18 Zähnezahlen auf, die sich um wenigstens einen Zahn unterscheiden, wobei die Zähnezahl der Innenverzahnung 18 größer ist als die Zähnezahl der Außenverzahnung 16. Dabei ist die Anordnung derart gewählt, daß sich die Innenverzahnung 18 des Gelenkteiles 14 auf der Außenverzahnung des Gelenkteiles 13 abwälzen kann.

Die bei der Bildung der Innenverzahnung 18 des Zahnkranzes 17 erzeugte und diesen zentrisch überbrückende Scheibe 19 ist auf einem Abschnitt 21 der Schwenkachse 20 gelagert, die einen weiteren zum Abschnitt 21 konzentrischen Abschnitt 22 aufweist, auf dem sich eine mit dem oberen Gelenkteil 14 fest verbundene, den Gelenkteil 13 in seinem Gelenkbereich übergreifende Lasche 23 lagernd abstützt. An den Abschnitt 22 schließt sich ein weiterer, konzentrischer Abschnitt 47 an, der einen durch Abflachungen gebildeten, unrunden und mit einem zentralen Gewindeloch versehenen Querschnitt aufweist, um ein in Fig. 1 angedeutetes Handrad drehfest zu haltern.

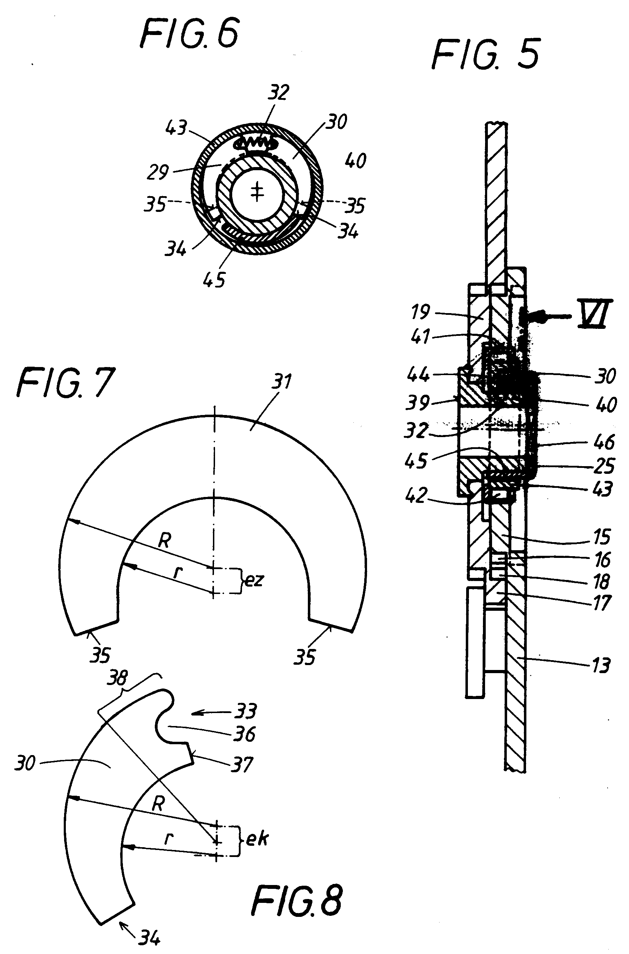

Auf dem an den Abschnitt 21 anschließenden Schwenkachsenabschnitt 24 des aus den Fig. 2 bis 4 ersichtlichen Ausführungsbeispieles ist ein Mitnehmer 25 drehfest angeordnet. Zur drehfesten Anordnung ist im vorliegenden Fall sowohl der Schwenkachsenabschnitt 24 als auch die diesen umgreifende Bohrung des Mitnehmers 25 ineinanderpassend gezahnt. Es ist jedoch auch möglich, den Mitnehmer 25 auf einen glatten Schwenkachsenabschnitt 24 aufzuschrumpfen, aufzupressen oder in anderer, bekannter Weise festzulegen. Der Mitnehmer 25 ist scheibenförmig ausgebildet und weist einen zum Mittelpunkt der Schwenkachse 20 äquidistanten Umfangsbereich 26 von mehr als 180° - bei dem vorgenannten Ausführungsbeispiel etwa 220° - auf, der von Mitnehmernasen 27 begrenzt ist, die durch eine sprunghafte Radiusvergrößerung des Umfanges 26 der als Mitnehmer 25 fungierenden Scheibe gebildet sind. Statt durch eine sprunghafte Radiusvergrößerung könnten die Mitnehmernasen 27 auch aus Mitnehmernasen bildenden Stiften, Schrauben od.dgl. bestehen.

Der obere Gelenkteil 14 stützt sich mit seiner den Zahnkranz 17 überbrückenden Scheibe 19 auf dem Abschnitt 21 der Schwenkachse 20 derart ab, daß die Innenverzahnung 18 seines Zahnkranzes 17 konzentrisch zur Schwenkachse 20 angeordnet ist. Dabei stützt sich auch die mit dem oberen Gelenkteil 14 fest verbundene Lasche 23 auf dem ebenfalls zentrischen Abschnitt 22 der Schwenkachse 20 unter Umfassung des Gelenkauges des Gelenkteiles 13 ab. Dieser Gelenkteil 13 greift mit der Außenverzahnung 16 seines Stirnrades 15 in die Innenverzahnung 18 des Zahnkranzes 17 des Gelenkteiles 14 ein, wobei konzentrisch zur Außenverzahnung 16 des Stirnrades 15 in diesem eine Lagerbohrung 28 angeordnet ist, welche den Mitnehmer 25 mit Spiel umgreift. Somit ist diese Lagerbohrung 28 exzentrisch zum Umfangsbereich 26 des Mitnehmers 25 angeordnet, was bedeutet, daß der Mittelpunkt der Lagerbohrung 28 gegenüber dem Mittelpunkt der Schwenkachse 20, um das aus der Differenz der Wälzkreise der beiden Verzahnungen 16 und 17 resultierende Exzentermaß versetzt ist. Dadurch ist zwischen dem Umfangsbereich 26 des Mitnehmers 25 und der Lagerbohrung 28 ein sichelförmiger Zwischenraum gebildet. In diesem Zwischenraum sind im Bereich der halben Breite der Lagerbohrung 28 bzw. des Mitnehmers 25 zum einen zwei spiegelbildlich einander gleichende Keilsegmente 29 und 30 und andererseits ein daneben angeordnetes, sich über die andere halbe Breite der Lagerbohrung 28 erstreckendes Zentriersegment 31 angeordnet. Dabei sind die Keilsegmente 29 und 30 hinsichtlich ihrer Länge derart bemessen, daß in dem der Eingriffsstelle 17 und 18 benachbarten Bereich des Zwischenraumes ein die Keilsegmente an ihren Breitseiten 33 beaufschlagender und die Keilsegmente 29 und 30 auseinanderspreizender Kraftspeicher 32 angeordnet werden kann, und daß die Keilsegmente mit ihren beiden vom Kraftspeicher 32 wegweisenden Schmalseiten 34 mit geringem Abstand vor den Mitnehmernasen 27 des Mitnehmers 25 enden. Statt einer Druckfeder kann für den Kraftspeicher 32 auch ein federelastisches Pufferglied, beispielsweise aus Kunststoff oder Gummi verwendet werden. Die Stirnseiten 35 des Zentriersegmentes 31 weisen in der aus Fig. 3 ersichtlichen Ruheposition einen größeren Abstand zur jeweiligen Mitnehmernase 27 des Mitnehmers 25 auf als die Schmalseiten 34 der Keilsegmente 29 und 30.

Der Außenradius R der Keilsegmente 29 und 30 stimmt mit dem Außenradius R des Zentriersegmentes 31 und auch mit dem Innenradius der Lagerbohrung 28 überein. Der Innenradius r der Keilsegmente 29 und 30 stimmt mit dem Innenradius r des Zentriersegmentes 31 und auch dem Außenradius des Umfangsbereiches 26 des Mitnehmers 25 überein. Allerdings ist das Exzentermaß ek zwischen dem Mittelpunkt des Innenradius r der Keilsegmente und dem Mittelpunkt des Außenradius R der Keilsegmente etwas größer als das Exzentermaß ez zwischen dem Mittelpunkt des Innenradius r des Zentriersegmentes und dem Mittelpunkt des Außenradius R dieses Zentriersegmentes 31. Diese Verhältnisse lassen sich am besten aus den Fig. 7 und 8 ablesen. An der Breitseite 33 eines jeden Keilsegmentes 29 bzw. 30 befindet sich zur Halterung des Druckspeichers eine sich in Achsrichtung der Schwenkachse erstreckende etwa mittig angeordnete Rille 36, wobei der unterhalb dieser Rille 36 verbleibende Wandteil der Breitseite 33 eine Anschlagnase 37 bilden kann.

Zur definierten Abstützung auf dem Exzenterbereich während der bei Ruheposition erreichten Radialspieleliminierung steigt der Außenumfang jeden Keilsegmentes 29, 30 auf etwa seiner letzten, zur Breitseite 33 hin gerichteten Viertellänge 38 flacher gekrümmt an als auf dem vorhergehenden Außenumfangsbereich jeden Keilsegmentes. Dadurch ergibt sich bei Ruheposition an der Außenseite jeden Keilsegmentes eine gegenüber dem Eingriffsbereich zu beiden Seiten hin versetzte Linienabstützung, die zusammen mit der Eingriffsstelle der Verzahnungen 16, 18 die spielfreie Lehnenabstützung ergeben.

Wenn nun ausgehend von der aus Fig. 3 ersichtlichen Ruheposition die Schwenkachse 20 und damit auch deren Schwenkachsenabschnitt 24 im Uhrzeigersinn gedreht werden, so legt sich zunächst die Mitnehmernase 27 an die Schmalseite 34 des Keilsegmentes 30 an und verschiebt dieses in eine Löselage, die dann erreicht ist, wenn die Mitnehmernase 27 auch an der dem Keilsegment 30 benachbarten Stirnseite 35 des Zentriersegmentes 31 anschlägt. Während dieser Anfangs-Bewegungsphase verbleibt das andere Keilsegment 29 in seiner Position, wie dies aus Fig. 4 ersichtlich ist, während das Keilsegment 30 sich dem Keilsegment 29 nähert, da die Druckfeder 32 zusammengedrückt wird. Infolge der Herstellung der Löselage der Keilsegmente 29 und 30 wird wegen des dann wieder vorhandenen Radialspieles eine radiale Verlagerung im Exzenterbereich möglich, bis sich die Lagerbohrung 28 im der Eingriffsstelle der Verzahnungen 16 und 18 benachbarten Bereich an das Zentriersegment 31 anlegt. Bei Weiterdrehung der Schwenkachse im Uhrzeigersinn erfolgt nun mit gleicher Winkelgeschwindigkeit eine entsprechende Verlagerung der Eingriffsstelle zwischen den Verzahnungen 17 und 18, so daß bei einer vollständigen Umdrehung der Schwenkachse der Gelenkteil 14 um eine Zahnteilung gegenüber dem Gelenkteil 13 verschwenkt ist. Eine Verschwenkung der Gelenkteile 13 und 14 im entgegengesetzten Sinne erfolgt in analoger Weise durch Verdrehung der Schwenkachse entgegen dem Uhrzeigersinn, wobei durch den Mitnehmer 25 dann zunächst die Schmalseite 34 des Keilsegmentes 29 beaufschlagt wird.

Bei dem aus den Fig. 5 und 6 ersichtlichen Ausführungsbeispiel handelt es sich um einen modifizierten Exzenterbereich der Gelenkteile 13 und 14. Die Verhältnisse der Verzahnungen 16 und 18 des Stirnrades 15 und des Zahnkranzes 17 entsprechen den Verhältnissen des aus den Fig. 2 bis 4 ersichtlichen Ausführungsbeispieles. Mit der den Zahnkranz 17 überbrückenden Scheibe 19 des Ausführungsbeispieles gemäß Fig. 5 ist jedoch eine Lagerbuchse 39 verbunden, die mit einem hülsenartigen Kragen 40 die Stützbohrung 41 des Stirnrades 15 durchgreift. In diese Stützbohrung 41 ist ein Wälzlager 42 eingesetzt, das sich auf einer Büchse 43 abstützt, deren Bodenteil 44 derart ausgebildet ist, daß es dem aus Fig. 7 ersichtlichen Zentriersegment 31 entspricht. Dabei umfaßt die durch den Innenradius r gebildete Ausnehmung den hülsenartigen Kragen 40 der Lagerbuchse 39, die ebenfalls von den beiden Keilsegmenten 29 und 30 umfaßt ist, die sich mit ihrem Außenumfang am Innenmantel der Büchse 43 anlegen. Auch diese Keilsegmente 29 und 30 werden durch einen Kraftspeicher 32 an ihren Breitseiten auseinandergedrückt. Durch die zwischen den Stirnseiten 35 des Zentriersegmentes 31 gebildete Aussparung im Bodenteil 44 der Büchse 43 greift der Arm 45 des Mitnehmers 25 ein, der auch - wie bei der Ausführung gemäß den Fig. 2 bis 4 beschrieben, die Schmalseite 34 der Keilsegmente 29 und 30 im Stellfall beaufschlagt. Der Mitnehmer 25 ist dem Kragen 40 der Lagerbüchse 39 nebengeordnet und weist eine unrunde Bohrung 46 auf, die mit einer in den Fig. 5 und 6 nicht dargestellten Schwenkachse drehfest verbunden ist.

Die Funktionsweise dieses Ausführungsbeispieles entspricht derjenigen, die oben bei der Erläuterung des in den Fig. 2 bis 4 dargestellten Ausführungsbeispieles beschrieben wurde.

Wie bereits erwähnt, geben die vorbeschriebenen Ausführungen den Erfindungsgegenstand nur beispielsweise wieder, der keinesfalls allein darauf beschränkt ist. Es sind vielmehr noch mancherlei Änderungen und andere Ausgestaltungen der Erfindung denkbar.

## Patentansprüche

1. Gelenkbeschlag für Sitze mit verstellbarer Rückenlehne, insbesondere Kraftfahrzeugsitze, bei denen ein dem Sitzteil zugeordneter, fester Gelenkteil und ein der Lehne zugeordneter, schwenkbarer Gelenkteil über eine Schwenkachse miteinander verbunden sind, wobei eine die Lage beider Gelenkteile zueinander bestimmende, als Getriebe ausgebildete Ver- und Feststelleinrichtung vorgesehen ist, und die Schwenkachse zur Lagerung des einen Gelenkteiles einen Exzenterabschnitt aufweist, der einen mit der Schwenkachse drehfesten Mitnehmer aufweist, der zwischen die Schmalseiten zweier gegeneinander geneigter, die Schwenkachse bereichsweise umgreifender Keilsegmente faßt, zwischen deren Breitseiten ein diese im Sinne einer Radialspielreduzierung auseinanderdrückender Kraftspeicher angeordnet ist,
**dadurch gekennzeichnet**,
daß der Exzenterabschnitt außer den Keilsegmenten (29, 30) ein neben diesen angeordnetes, auf der Schwenkachse (20) bereichsweise abgestütztes, sichelartiges Zentriersegment (31) umfaßt, das zusammen mit den Keilsegmenten (29,30) von der Lagerbohrung (28,41) des einen Gelenkteiles (13) umgriffen ist.

2. Gelenkbeschlag nach Anspruch 1, dadurch gekennzeichnet, daß die Außenradien (R) und die Innenradien (r) von Keilsegmenten (29,30) und Zentriersegment (31) übereinstimmen, jedoch das Exzentermaß (ek) zwischen dem Zentrum des Innenradius (r) und dem Zentrum des Außenradius (R) der Keilsegmente (29,30) etwas größer ist, als das Exzentermaß (ez) zwischen dem Zentrum des Innenradius (r) und dem Zentrum des Außenradius (R) des Zentriersegmentes (31).

3. Gelenkbeschlag nach Anspruch 1 und/oder 2, dadurch gekennzeichnet, daß die einander zugekehrten Breitseiten (33) der Keilsegmente (29,30) eine sich in Achsrichtung der Schwenkachse (20) erstreckende Rille (36) aufweisen, und der unterhalb dieser Rille (36) befindliche Bereich der Breitseite (33) eine Anschlagnase (37) bildet.

4. Gelenkbeschlag nach einem oder mehreren der vorhergehenden Ansprüche, dadurch gekennzeichnet, daß der Außenumfang jeden Keilsegmentes (29,30) auf etwa seiner Viertellänge (38) zur Breitseite (33) hin flacher gekrümmt ansteigt als auf seinem vorhergehenden Längenbereich.

5. Gelenkbeschlag nach einem oder mehreren der vorhergehenden Ansprüche, dadurch gekennzeichnet, daß zwischen den einen größeren Winkel als 180° voneinander aufweisenden Anschlagflächen (27) des Mitnehmers (25) das Zentriersegment (31) mit größerem Spiel als die durch den Kraftspeicher (32) miteinander in Verbindung stehenden und ebenfalls zwischen die Anschlagflächen (27) des Mitnehmers (25) fassenden Keilsegmente (29,30) angeordnet ist.

6. Gelenkbeschlag nach ein oder mehreren der vorhergehenden Ansprüche, dadurch gekennzeichnet, daß das sichelartige Zentriersegment (31) den Bodenteil (44)einer Büchse (43) bildet, in welche die Keilsegmente (29,30) mit ihrem Kraftspeicher (32) eingesetzt sind, wobei zwischen die Keilsegmente (29,30) und in den Bodenausschnitt des Zentriersegmentes (31) ein Arm (45) des Mitnehmers (25) faßt, der scheibenartig gestaltet und mit einer Stellwelle drehfest verbunden ist.

7. Gelenkbeschlag nach Anspruch 6, dadurch gekennzeichnet, daß die das Zentiersegment (31) aufweisende Büchse (43) an ihrem Außenumfang ein Wälzlager (42) lagert, das in der Lagerbohrung (41) eines der beiden Gelenkteile abgestützt ist.

## Claims

1. A hinge assembly for seats, having an adjustable backrest, particularly for car seats, with which a fixed hinge member associated with the seat part and a pivotable hinge member associated with the rest are connected together by way of a pivot axis, wherein an adjustment- and fixing device in the form of a gear which defines the position of the two hinge members relative to each other is provided, and the pivot axis has an eccentric section to mount the one hinge member, the eccentric section having an entrainment member which is non-rotational with the pivot axis and which is held between the narrow sides of two wedge segments which are inclined towards each other and which regionally embrace the pivot axis, between the broad sides of which wedge segments is arranged an accumulator which pushes these apart to produce a reduction in radial play,
**characterised in that**,
the eccentric section, outside the wedge segments (29, 30), embraces a sickel-like centering segment (31) which is supported regionally on the pivot axis (20) and which is arranged adjacent to the wedge segments, the centering segment being embraced, together with the wedge segments (29, 30) by the bearing bore (28, 41) of the one hinge member (13).

2. A hinge assembly according to Claim 1, characterised in that the external radii (R) and the internal radii (r) of the wedge segments (29, 30) and centering segment (31) are identical, but the size of the eccentric (ek) is somewhat greater in size between the centre of the internal radius (r) and the centre of the external radius (R) of the wedge segments (29, 30) than the size of the eccentric (ez) between the centre of the inner radius (r) and the centre of the external radius (R) of the centering segment (31).

3. A hinge assembly according to Claim 1 and/or 2, characterised in that the mutually facing broad sides (33) of the wedge segments (29, 30) have a groove (36) which extends in the axial extent of the pivot axis (20) and the region, disposed under this groove (36), of the broad side (33) forms an abutment lug (37).

4. A hinge assembly according to one or more of the preceding claims, characterised in that the external periphery of each wedge segment (29, 30) increases its curvature over approximately one quarter (38) of its length towards the broad side (33) in a flatter manner than over its previous region of length.

5. A hinge assembly according to one or more of the preceding claims, characterised in that between the abutment surfaces (27) of the entrainment member (25) which form an angle greater than 180° from one another the centering segment (31) is arranged with greater play than the wedge segments (29, 30) which are connected together by the accumulator (32) and which are likewise held between the abutment faces (27) of the entrainment member (25).

6. A hinge assembly according to one or more of the preceding claims, characterised in that the sickel-like centering segment (31) forms the bottom portion (44) of a bush (43), into which bush the wedge segments (29, 30) are inserted with their accumulator (32), wherein between the wedge segments (29, 30) and in the bottom section of the centering segment (31) an arm (45) is held of the entrainment member (25) which is disc-like in design and non-rotationally connected to a regulating shaft.

7. A hinge assembly according to Claim 6, characterised in that the bush (43) which has the centering segment (31) mounts a roller bearing (42) on its outer periphery, the roller bearing being supported in the bearing bore (41) of one of the two hinge members.

## Revendications

1. Ferrure d'articulation pour siège à dossier réglable, en particulier pour siège de véhicule automobile, dans laquelle une partie fixe de l'articulation montée sur l'assise du siège et une partie susceptible de pivoter de l'articulation montée sur le dossier, sont reliées l'une à l'autre par un axe de pivotement, un dispositif de réglage et de blocage étant prévu comme mécanisme déterminant la position des deux parties de l'articulation l'une par rapport à l'autre, et l'axe de pivotement comportant pour le positionnement de l'une des parties de l'articulation un tronçon excentrique munie d'un organe d'entraînement solidaire en rotation de l'axe de pivotement et logé entre les faces étroites de deux segments à coins inclinés l'un par rapport à l'autre et entourant en partie l'axe de pivotement, et entre les faces larges desquelles est disposé un accumulateur d'énergie tendant à les écarter l'un de l'autre dans le sens de la réduction d'un jeu radial, caractérisé en ce que le tronçon excentrique comporte en plus des segments à coin (29, 30) un segment de centrage (31) en forme de croissant, disposé à côté des segments à coin et en appui sur une zone de l'axe de pivotement (20), et qui est logé, avec les segments à coin (29, 30) dans l'alésage de palier (28, 41) de l'une (13), des parties de l'articulation.

2. Ferrure d'articulation selon la revendication 1, caractérisée en ce que les rayons extérieurs (R) et les rayons intérieurs (r) des segments à coin (29, 30) et du segment de centrage (31) sont en correspondance, l'excentration (ek) entre le centre du rayon intérieur (r) et le centre du rayon extérieur (R) des segments à coin (29, 30) étant un peu supérieure à l'excentration (ez) entre le centre du rayon intérieur (r) et le centre du rayon extérieur (R) du segment de centrage (31).

3. Ferrure d'articulation selon la revendication 1 et/ou 2, caractérisée en ce que les faces larges (33) se faisant face des segments à coin (29, 30) comportent une gorge (36) s'étendant selon la direction de l'axe de pivotement (20), et en ce que la zone des faces larges (33) se trouvant sous cette gorge (36) forment un bec de butée (37);

4. Ferrure d'articulation selon l'une ou plusieurs des revendications précédentes, caractérisée en ce que le pourtour extérieur de chaque segment à coin (29, 30) sur environ le quart (38) de sa longueur adjacent à la face large (33), se développe avec une courbure plus aplatie que sur la partie précédente de sa longueur.

5. Ferrure d'articulation selon l'une ou plusieurs des revendications précédentes, caractérisée en ce que le segment de centrage (31) est disposé entre les surfaces de butée (27) de l'organe d'entraînement qui embrassent entre elles un angle supérieur à 180°C, avec un jeu plus grand que les segments à coin (29, 30) reliés entre eux par l'accumulateur d'énergie (32) et logés également entre les surfaces de butée (27) de l'organe d'entraînement (25).

6. Ferrure d'articulation selon l'une ou plusieurs des revendications précédentes, caractérisée en ce que le segment de centrage en croissant (31) forme la pièce de fond (44) d'un manchon (43), dans lequel sont placés les segments à coin (29, 30) avec leur accumulateur d'énergie (32), un bras (45) de l'organe d'entraînement (25) étant logé entre les segments à coin (29, 30) et dans la découpe de fond du segment de centrage (31), ce bras ayant la forme d'un disque et étant lié rigidement en rotation à un arbre de réglage.

7. Ferrure d'articulation selon la revendication 6, caractérisée en ce que le manchon (43) comprenant le segment de centrage (31) loge à sa périphérie extérieures un palier à roulement (42), qui est monté dans l'alésage de palier (41) de l'une des deux parties de l'articulation.
